# EUROPEAN PATENT APPLICATION

(11) **EP 1 746 489 A1**
(43) Date of publication of application: **24.01.2007**
(21) Application number: 05257494.4
(22) Date of filing: 06.12.2005
(51) Int. Cl.: G06F 3/06

(54) **Storage control system**

(30) Priority: 05.07.2005 JP 2005196046
(71) Applicant: HITACHI, LTD., Chiyoda-ku Tokyo 100-8280 (JP)
(72) Inventor: Ida, Junichi, Hitachi, Ltd. I.P. Group, Chiyoda-ku Tokyo 100-8220 (JP); Kanai, Hiroki, Hitachi, Ltd. I.P. Group, Chiyoda-ku Tokyo 100-8220 (JP)
(74) Representative: Hodsdon, Stephen James

(57) **Abstract**

The network channel adapter (CHN 8) that processes file access requests is divided into a CHN-NAS portion (3) that performs processing to convert a file access request to a block access request and a CHN-IO portion (5) that outputs the block access request. Part 3 where the CHN-NAS portion (3) is installed and part (4) where the CHN-IO portion (5) is installed are in separate locations.

## Description

This application relates to and claims priority from Japanese Patent Application No. 2005-196046, filed on July 5, 2005 the entire disclosure of which is incorporated herein by reference.

The present invention relates to a storage control technology.

In a database system that handles large-scale data such as a data center, for example, data is managed by using a storage control system that is constituted separately from a host computer. The storage control system is a disk array system such as RAID (Redundant Array of Independent Inexpensive Disks) that is constituted by arranging a multiplicity of storage devices in an array shape, for example.

Such storage control systems include a storage control system that is disclosed by Japanese Patent Application Laid Open No. 2004-227097, for example. This storage control system has a built-in channel control portion that receives access requests from an information processing apparatus. Channel control portions include a network channel adapter ('CHN' hereinafter) that receives file access requests, a fiber channel adapter ('CHF' hereinafter) that receives a block access request that follows a fiber channel protocol, and a channel adapter ('CHA' hereinafter) that receives a block access request that follows a communication protocol that is different from the fiber channel protocol. The storage control system is adapted to permit a mixture of CHN, CHF, and CHA. Two processors, namely a CPU for administering control to allow the CHN to function as an NAS (Network Area Storage) board, and an IO processor that controls the exchange of data and commands and so forth and relays communications between the CPU and storage device side are mounted in the CHN. Although an IO processor is mounted in a CHF and CHA, there is no need to mount a CPU that is mounted in the CHN. The storage control system has a plurality of slots and any of a CHN, CHF, and CHA can be mounted in each slot.

Generally, a CPU, which processes file access requests, consumes a larger amount of power and emits a greater amount of heat than an IO processor, which processes block access requests. Hence, a CHN consumer consumes a larger amount of power and emits a greater amount of heat than other types of channel control portions such as a CHF and CHA. Therefore, it is thought that, when any type of channel control portion may be mounted in any slot as in the case of the storage control system above, a power supply performance (power supply, for example) and cooling performance (number of fans, for example) for which it is assumed that a CHN is mounted in each slot is necessary.

However, the required supply performance and cooling performance are prepared when only other types of channel control portions such as CHF or CHA are mounted in all the slots, for example, and results in wastage in the supply performance and cooling performance.

Therefore, an object of the present invention is to make it possible to reduce performance wastage in comparison with a storage control system that allows various control substrates to be mounted in the same position that comprises an interface control circuit substrate that makes it possible to process file access requests.

Further objects of the present invention will become evident from the following description.

The storage control system according to a first aspect of the present invention comprises a first interface control circuit substrate and a second interface control circuit substrate. The first interface control circuit substrate constitutes an interface with a host apparatus that receives a file access request from the host apparatus, converts the received file access request to a block access request, and outputs the converted block access request. The second interface control circuit substrate constitutes an interface with a storage apparatus that receives the block access request outputted by the first interface control substrate and accesses the storage apparatus in accordance with the received block access request. The first interface control circuit substrate is constituted by communicably connecting a first subcircuit substrate that converts the file access request from the host apparatus to a block access request and outputs the block access request, and a second subcircuit substrate that receives and outputs the block access request outputted by the first subcircuit substrate.

In one embodiment, the storage control system can comprise a storage area that is capable of storing electronic information. Each of the first subcircuit substrate and second subcircuit substrate can comprise a plurality of circuit parts (processor, memory, and so forth, for example). At least one circuit part of the plurality of circuit parts can be detachably installed in at least one of the first subcircuit substrate and second subcircuit substrate. The storage area is able to store constitution information representing two or more circuit parts that are to be installed on the subcircuit substrate that allows circuit parts to be detachably installed among the first subcircuit substrate and second subcircuit substrate. At startup, at least one of the first subcircuit substrate and second subcircuit substrate (independently or together, for example) is able to execute detection processing to detect a circuit part that is installed on a subcircuit substrate that allows circuit parts to be detachably installed, execute comparison processing to compare the constitution information stored in the storage area and detection results, and determine whether to permit operation of the first interface control circuit substrate that is constituted by the first subcircuit substrate and second subcircuit substrate on the basis of the comparison results.

In a further embodiment, of the first subcircuit substrate and second subcircuit substrate, at least the first subcircuit substrate can detachably comprise at least one circuit part. In this case, the second subcircuit substrate can undetachably comprise all the circuit parts. The first subcircuit substrate is able to execute the detection processing and the second subcircuit substrate is able to execute the comparison processing.

In a still further embodiment, a display apparatus that allows information to be displayed may be communicably connected to the storage control system. At least one of the first subcircuit substrate and second subcircuit substrate is able to judge whether a conforming information element is contained in the constitution information for each of the detected circuit parts in the comparison processing and display the judgment result for each circuit part on the display apparatus.

In a still further embodiment, at least one of the first subcircuit substrate and second subcircuit substrate is able to disallow operation of the first interface control circuit substrate that is constituted by the first subcircuit substrate and second subcircuit substrate when it is recognized, as a result of the comparison, that a circuit part not conforming with the circuit part represented by the constitution information is installed. Information on supported circuit parts, which is the type of the circuit part to be installed, may be contained in the constitution information.

In a still further embodiment, at least one of the first subcircuit substrate and second subcircuit substrate is able to permit operation of the first interface control circuit substrate that is constituted by the first subcircuit substrate and second subcircuit substrate in cases where, even when it is recognized, as a result of the comparison, that a circuit part that does not conform with the circuit part represented by the constitution information is installed, the result of the recognition does not match a predetermined condition.

In a still further embodiment, a display apparatus that is capable of displaying information may be communicably connected to the storage control system. The storage control system can comprise a detection result storage area that is capable of storing the detection results during startup. During operation of the first interface control circuit substrate, a subcircuit substrate that allows circuit parts to be detachably mounted is able to update the detection results during startup when the occurrence of a fault in a certain circuit part that is installed in the subcircuit substrate is detected. At least one of the first subcircuit substrate and second subcircuit substrate is able to compare the updated detection result with the constitution information, specify the circuit part in which the fault has occurred, and display information representing the specified circuit part.

In a still further embodiment, at least one of the first subcircuit substrate and second subcircuit substrate is able to access the detected circuit part and execute predetermined error processing when access fails.

In a still further embodiment, a display apparatus that allows information to be displayed may be communicably connected to the storage control system. The storage control system further comprises a correspondence information storage area that is capable of storing substrate correspondence information indicating correspondence between a first substrate ID corresponding with the first subcircuit substrate and a second substrate ID corresponding with the second subcircuit substrate, wherein the storage control system is able to receive a designation of a substrate ID and a substrate classification as either the first subcircuit substrate or the second subcircuit substrate, specify the substrate classification and substrate ID corresponding with the designated substrate classification and substrate ID from the substrate correspondence information stored in the correspondence information storage area, and display the specified substrate classification and substrate ID on the display apparatus.

In a still further embodiment, the first subcircuit substrate and second subcircuit substrate may be communicably connected by means of a data line and maintenance line. At least one of the first subcircuit substrate and second subcircuit substrate is able to notify the partner subcircuit substrate of an anomaly via the maintenance line when a fault has occurred in the data line.

In a still further embodiment, the storage control system may comprise a first substrate installation part where the first subcircuit substrate is installed; and a second substrate installation part where the second subcircuit substrate is installed. The first substrate installation part and the second substrate installation part may exist in separate locations.

Features of two or more of the above embodiments may be combined if desired.

An information processing apparatus according to a second aspect of the present invention comprises a first subcircuit substrate; a second subcircuit substrate constituting a circuit substrate that is physically separate from the first subcircuit substrate; and a storage area capable of storing electronic information. A circuit substrate for executing predetermined information processing is constituted by communicably connecting the first subcircuit substrate and second subcircuit substrate. Each of the first subcircuit substrate and second subcircuit substrate can comprise a plurality of circuit parts. At least one circuit part of the plurality of circuit parts is detachably installed in at least one of the first subcircuit substrate and second subcircuit substrate. The storage area is able to store constitution information representing two or more circuit parts that are to be installed on a subcircuit substrate that allows circuit parts to be detachably installed among the first subcircuit substrate and second subcircuit substrate. At startup, at least one of the first subcircuit substrate and second subcircuit substrate executes detection processing to detect circuit parts installed on a subcircuit substrate that allows circuit parts to be detachably installed, executes comparison processing that compares the constitution information stored in the storage area and the detection results, and determines whether to permit operation of the circuit substrate that is constituted by the first subcircuit substrate and second subcircuit substrate on the basis of the comparison results. The information processing apparatus may be a storage control system or a computer machine such as a personal computer.
In the figures:
Fig. 1A is an external schematic view of a storage control system of a first embodiment of the present invention;
Fig. 1B is a block diagram showing an example of the constitution of a computer system comprising a storage control system 1 according to the first embodiment;
Fig. 2A is a block diagram showing an example of the constitution of a CHN-NAS portion 3;
Fig. 2B is a block diagram showing an example of the constitution of a CHN-IO portion 5;
Fig. 3A shows an example of the constitution of correspondence information;
Fig. 3B shows an example of the flow of correspondence display processing performed by a control unit 31;
Fig. 3C shows an example of a GUI that is displayed on the control unit 31;
Fig. 3D shows another example of a GUI that is displayed on the control unit 31;
Fig. 4A shows an example of the constitution of a constitution table 89;
Fig. 4B shows an example of the flow of processing that is performed as a result of a NAS processor 77A reading and executing a constitution detection program 71 during startup;
Fig. 5A shows an example of the constitution of detection result information 75;
Fig. 5B shows an example of the flow of processing that is performed as a result of an IO processor 85 reading and executing a judgment program 91 during startup;
Fig. 6A shows an example of the flow of processing that is performed as a result of the NAS processor 77A executing an post-processing program 73;
Fig. 6B shows an example of a detailed judgment result display;
Fig. 7A shows an example of the process flow when the constitution detection result information 75 is updated during operation of the CHN8 and an example of the process flow that is performed after the update has been performed;
Fig. 7B is an explanatory diagram that makes it possible to separate power supply channels and cooling channels in the CHN-NAS portion 3 and CHN-IO portion 5 respectively;
Fig. 8A shows an example of the constitution of the CHN-NAS portion of a second embodiment of the present invention;
Fig. 8B shows an example of the constitution of the CHN-IO portion of the second embodiment of the present invention;
Fig. 9A shows an example of the constitution of a judgment control table of a third embodiment of the present invention;
Fig. 9B shows an example of the flow of judgment control processing that is performed in the third embodiment of the present invention;
Fig. 10A shows an example of the constitution of a connection between the CHN-NAS portion 3 and CHN-IO portion 5 of the fourth embodiment of the present invention;
Fig. 10B shows an example of the flow of processing that is performed by the NAS processor 77A and IO processor 85 of the fourth embodiment of the present invention; and
Fig. 10C shows an example of the flow of detected part confirmation processing that is performed in a fifth embodiment of the present invention.

Several embodiments of the present invention will be described hereinbelow with reference to the drawings.

### First Embodiment

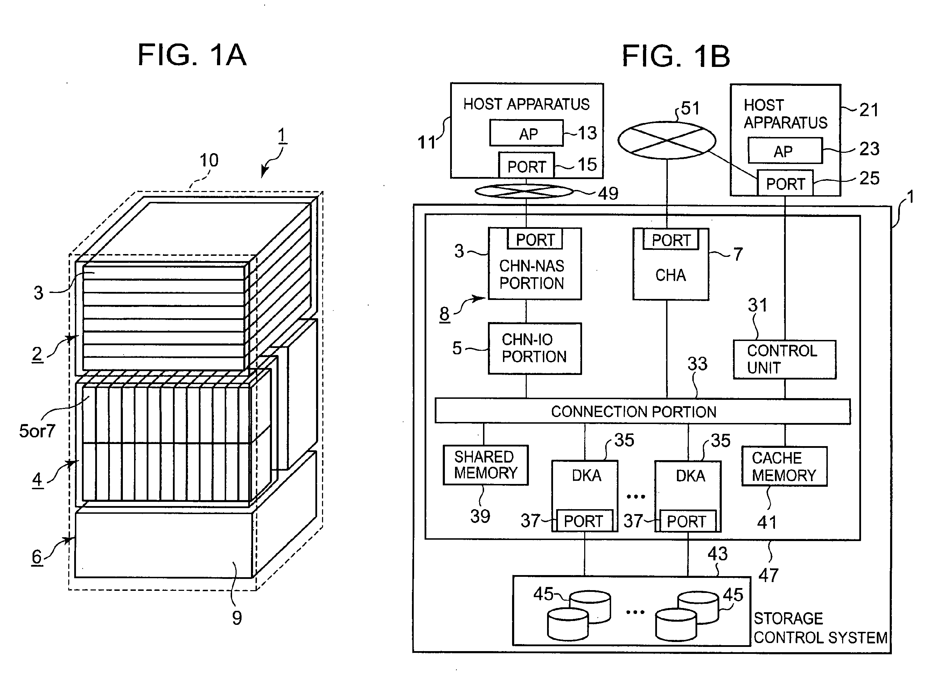

Fig. 1A is an external schematic view of a storage control system of a first embodiment of the present invention.

The storage control system 1 can be constructed in one enclosure 10, for example. Further, because the constitution in the enclosure 10 is shown in a way that is easy to understand, enclosure 10 is shown by means of imaginary lines (dotted lines in Fig. 1A).

A plurality of parts in multiple stages (three stages in the illustrated example) exists in enclosure 10. More specifically, an upper part 2, middle part 4, and lower part 9, for example, exist.

A plurality of CHN-NAS portions 3 arranged in the height direction of the storage control system 1 exist in the upper part 2. The CHN-NAS portion 3 is one type of circuit substrate. Each CHN-NAS portion 3 is mounted in a lateral state (in other words, in a laid state). The CHN-NAS portion 3 will be described subsequently.

A plurality of interface control substrates arranged in the width direction of the storage control system 1 exists at the front side of the middle part 4. Each interface control substrate is a substrate other than the CHN-NAS portion 3, such as the CHN-IO portion 5 or CHA 7, for example. The CHN-IO portion 5 and CHA7 are both one type of circuit substrate. The CHN-IO portion 5 or CHA7 are each mounted in an upright state (in other words, a standing state). The CHN-IO portion 5 and CHA7 will be described subsequently.

Although not illustrated, a plurality of storage devices arranged in the lateral direction of the storage control system 1 exists on the rear side of the middle part 4. Each of the storage devices is a hard disk drive but is not limited to a hard disk drive. The storage devices may also be optical disk drives (DVD drives, for example), magnetic disk drives, or optional storage devices.

A power supply portion 9 comprising a power supply unit, fan unit and so forth exists in the lower part 6. Each of the various types of substrates 3, 5, and 7 mentioned earlier can be driven by means of the supply of power of the power supply portion 9.

Fig. 1B is a block diagram showing an example of the constitution of a computer system comprising a storage control system 1 according to the first embodiment.

The storage control system 1 is connected to a first communication network 49 to which a host apparatus 11 is connected and a second communication network 51 to which a host apparatus 21 is connected. The first communication network 49 is a communication network for exchanging file-level data (a LAN (Local Area Network), for example) and the second communication network 51 is a communication network for exchanging block-level data (a SAN (Storage Area Network), for example).

Host apparatuses 11 and 21 are computer apparatuses that comprise information processing resources such as a CPU (Central Processing Unit) and memory, for example, and can be constituted as personal computers, workstations, and main frames, and so forth, for example. The host apparatuses 11 and 21 can comprise, for example, application programs ('AP' hereinafter) 13, 23, and so forth, for using the storage control system 1, communication ports 15 and 25, and a Windows (registered trademark) or UNIX (registered trademark) OS (operating system). The AP13 that is provided in the host apparatus 11 that issues a file access request is an NFS (Network File System) when the OS is UNIX (registered trademark) and a CIFS (Common Interface File System) when the OS is Windows (registered trademark), for example.

The storage control system 1 can be a RAID system comprising a plurality of storage devices 45, for example. The storage control system 1 comprises one or a plurality of CHA (channel adapters) 7, one or a plurality of CHN (network channel adapters) 8, a plurality of DKA (disk adapters) 35, a cache memory 41, a shared memory 39, a connection portion 33, a storage portion 43 consisting of a plurality of storage devices 45, and the control unit 31.

The CHA 7 is an interface control substrate that comprises a processor ('IO processor' hereinafter) that performs processing for data input/outputs with respect to the storage devices 45 (access such as writing or reading). The CHA7 receives a block access request (that is, a block-level access request) from the host apparatus 21 via the second communication network 51 and is able to access the storage devices 45 as a result of the IO processor receiving the block access request and issuing same to the DKA 35. Various types of protocols such as the fiber channel protocol can be adopted as the communication protocol between the CHA7 and host apparatus 21.

The CHN8 is one type of interface control apparatus and has a first function of receiving a file access request (that is, a file-level access request) and converting same to a block access request, and a second function of receiving the block access request and issuing same to the DKA35. The CHN8 is constituted by a plurality of circuit substrates such as a circuit substrate 3 with the first function and a circuit substrate 5 with the second function. Hereinafter, circuit substrate 3 is expediently called 'CHN-NAS portion 3' from the perspective of the above functions and circuit substrate 5 is called the 'CHN-IO portion 5'. The CHN-NAS portion 3 and CHN-IO portion 5 will be described in detail subsequently.

Each DKA 35 exchanges data with the storage devices 45. Each of the DKA 35 is constituted by one type of interface control substrate that comprises a CPU, memory, and so forth. Each of the DKA 35 reads and writes data to and from the storage devices 45 in accordance with access requests issued by the CHN-IO portion 5 or CHA7.

The cache memory 41 is a volatile or nonvolatile memory, for example, that is capable of temporarily storing data that is received by the host apparatus 11 or 21 and data that is read from the storage devices 45, and so forth.

The shared memory 39 is a nonvolatile memory, for example, that stores control information relating to data that is exchanged between the host apparatuses 11 and 21 (information showing which data is to be stored in a cache region that is secured on the cache memory 41, for example. Further, in the illustrated example, the cache memory 41 and shared memory 39 are physically divided but may be one memory. In this case, the memory space on the memory may be logically divided into a cache memory space and a shared memory space.

The connection portion 33 mutually connects the CHN-IO portion 5, DKA 35, cache memory 41, and shared memory 120. The connection portion 33 can be constituted as a high-speed bus such as an ultra high-speed crossbar switch that performs data transmission in accordance with a high-speed switching operation, for example. Further, the connection portion 33 may comprise a communication network (LAN, for example) that allows the control unit 31 to access the CHN-IO portion 5, CHA7, DKA 35, or shared memory 39.

The control unit 31 is an apparatus that allows access to the CHN-IO portion 5, CHA7, DKA 35, or shared memory 39. More specifically, for example, the control unit 31 is a maintenance terminal that can comprise an input apparatus that is operated by an administrator (a keyboard, mouse, or the like, for example), a control apparatus (motherboard on which CPU or the like is mounted, for example) that executes processing according to an operation by the administrator, and a display apparatus on which information that is established in the shared memory 39 is displayed (a display screen, for example). The control unit 31 may be mounted in the storage control system 1 or may be provided remotely vi a communication network such as a LAN. Further, the functions of the control unit 31 may be mounted in the host apparatuses 11 and 21 or the host apparatuses 11 and 21 may control the storage control system 1 as the control unit 31.

In such a storage control system 1, data can be inputted to and outputted from the storage device 35 according to the following process flow.

For example, when a file access request for reading data is issued by the host apparatus 11, the CHN-NAS portion 3 receives the file access request. The CHN-NAS portion 3 is able to convert the received file access request to a block access request and transmit the block access request to the CHN-IO portion 5. The CHN-IO portion 5 is able to receive the block access request and transmit the received block access request to the DKA 35. The DKA 35 is able to receive the block access request, read data from the storage device 35 in accordance with the request and write the data thus read to the cache memory 41. The CHN-IO portion 5 is able to read data that has been written to the cache memory 41 and transmit the data thus read to the CHN-NAS portion 3. The CHN-NAS portion 3 is able to receive data from the CHN-IO portion 5 and transmit the data thus received to the host apparatus 11.

Furthermore, for example, when a file access request for writing data is issued by the host apparatus 11, the CHN-NAS portion 3 is able to receive the file access request and data. The CHN-NAS portion 3 is able to convert the received file access request to a block access request and transmit the block access request and the received data to the CHN-IO portion 5. The CHN-IO portion 5 is able to receive the block access request and data, transmit the received block access request to the DKA35, and write the received data to the cache memory 41. The DKA35 is able to receive the block access request, read data from the cache memory 41 in accordance with the request, and write the data thus received to the storage device 45.

The above is a summary for the storage control system 1. The CHN-NAS portion 3 and CHN-IO portion 5 will be described in detail next.

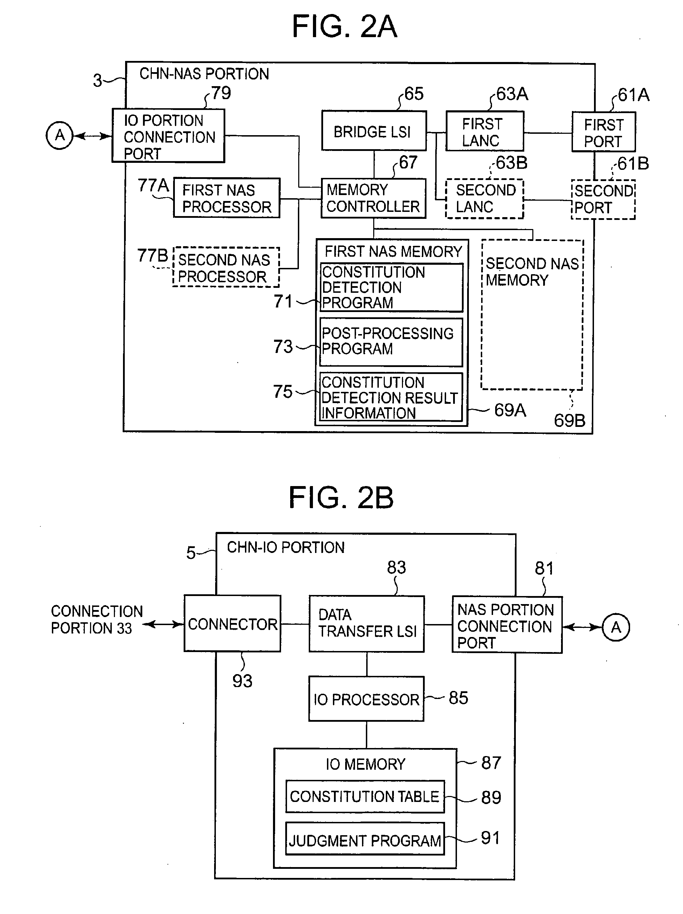

Fig. 2A is a block diagram showing an example of the constitution of the CHN-NAS portion 3.

The CHN-NAS portion 3 is a print-wired circuit in a plurality of predetermined positions of which predetermined types of circuit parts (hardware resources) are detachably or undetachably mounted. That is, the CHN-NAS portion 3 is afforded freedom of design by selecting which of two or more detachable circuit parts is mounted and which is not mounted. For example, performance waste and cost increases can be suppressed by not mounting unnecessary circuit parts in accordance with the performance required for the CHN-NAS portion 3, for example.

A plurality of circuit parts that can be mounted on the CHN-NAS portion 3 include, for example, a first port 61A, a second port 61B, a first LAN controller (LAN controller is abbreviated to 'LANC' hereinbelow) 63A, a second LANC 63B, a bridge LSI 65, a memory controller 67, a first NAS memory 69A, a second NAS memory 69B, a first NAS processor 77A, a second NAS processor 77B, and an IO portion connection port 79. Of this plurality of circuit parts, the two or more detachable circuit parts are the circuit parts shown using dotted lines in Fig. 2A, that is, the second port 61B, second LANC 63B, second NAS memory 69B, and second NAS processor 77B. The other circuit parts 61A, 63A, 65, 67, 69A, 77A, and 79 are undetachably mounted on the substrate 12 by means of solder, for example.

Each of the ports 61A and 61B is connected to the first communication network 49.

Each of the LANC 63A and 63B is able to control the port 61A or 61B with which the LANC 63A and 63B correspond respectively in accordance with instructions received from the NAS processors 77A and 77B via the memory controller 67 and bridge LSI 65. Another type of interface apparatus corresponding with the type of the first communication network 49 may be mounted instead of the LANC 63A and 63B.

The bridge LSI 65 is an LSI (Large-Scale Integrated circuit) that enables mutual communications between the LANC 63A and 63B and the memory controller 67, for example.

The memory controller 67 is an LSI for controlling communications between the NAS processors 77A and 77B. The memory controller 67 is connected to the NAS processors 77A and 77B, the NAS memories 69A and 69B, and the bridge LSI 65.

Each of the NAS memories 69A and 69B are nonvolatile memories, for example, that are able to store programs for administering control of the NAS processors 77A and/or 77B and data that is exchanged between the cache memory 41 and host apparatus 11 and so forth. More specifically, for example, each of the NAS memories 69Aand 69B is able to store a file systemprogram (not illustrated), a network control program (not illustrated), a constitution detection program 71, a post-processing program 73, and constitution detection result information 75. The file system program is able to manage correspondence between a file name contained in a file access request and address information (LUN and header logical block address, for example) for the location where the file with the file name is stored as a result of being read to the NAS processors 77A and 77B and executed by same, for example, convert the file access request into a block access request on the basis of this correspondence, and output the converted block access request (the outputted block access request is inputted to the CHN-IO portion 5 via the memory controller 67 and IO portion connection port 79). The network control program is constituted comprising two file system protocols, which are NFS and Samba, for example. NFS receives file access requests from the host apparatus in which a UNIX (registered trademark) operating system that is operated by NFS is installed. On the other hand, Samba receives file IO commands of host terminals
in which the Windows (registered trademark) operating system that is operated by a CIFS System is installed. The constitution detection program 71, post-processing program 73, and constitution detection result information 75 will be described subsequently.

Each of the NAS processors 77A and 77B is a CPU (64-bit CPU, for example), for example. The NAS processor 77A and/or 77B have a higher performance (a faster processing speed and a higher operating clock frequency, for example) than the IO processor 85 described subsequently, for example. Each of the NAS processors 77A and 77B is connected to the memory controller 67.

The IO portion connection port 79 is connected communicably with a NAS portion connection port 81 (described subsequently) of the CHN-IO portion 5 (connected via a cable or the like, for example).

Fig. 2B is a block diagram showing an example of the constitution of the CHN-IO portion 5.

The CHN-IO portion 5 is a print-wired circuit substrate in each of a plurality of predetermined positions of which predetermined types of circuit parts (hardware resources) are undetachably mounted. Mounted circuit parts include the NAS portion connection port 81, a data transfer LSI 83, the IO processor 85, an IO memory 87, and connector 93.

The data transfer LSI 83 is connected to the NAS portion connection port 81, IO processor 85, and connector 93 and is able to control the transfer of data therebetween.

The IO memory 87 is a nonvolatile memory, for example, that is able to store computer programs or the like that administer control of the IO processor 504. More specifically, for example, the IO memory 87 is able to store a constitution table 89 and the judgment program 91. The constitution table 89 and judgment program 91 will be described subsequently.

The IO processor 85 is a CPU (32-bit CPU, for example), for example. The IO processor 85 is able to exchange data with the connection portion 33, relay data communications between the NAS processors 77A and 77B and the connection portion 33 and execute various other processes by executing one or a plurality of computer programs that are read from the IO memory 87, for example.

The connector 93 is connected to the connection portion 33. As a result, the IO processor 85 is able to communicate with the connection portion 33 via the connector 93 and data transfer LSI 83 and, consequently, is able to communicate with the cache memory 41, shared memory 39, and DKA35 via the connection portion 33.

An in example of the process flow that is performed in this embodiment will be described hereinbelow.

For example, information indicating which CHN-IO portion 5 corresponds with which CHN-NAS portion 3 (correspondence information hereinbelow) is established in a certain storage area of the storage control system 1. This correspondence information 261 can be written from the control unit 31 to the shared memory 39 via the connection portion 33, for example.

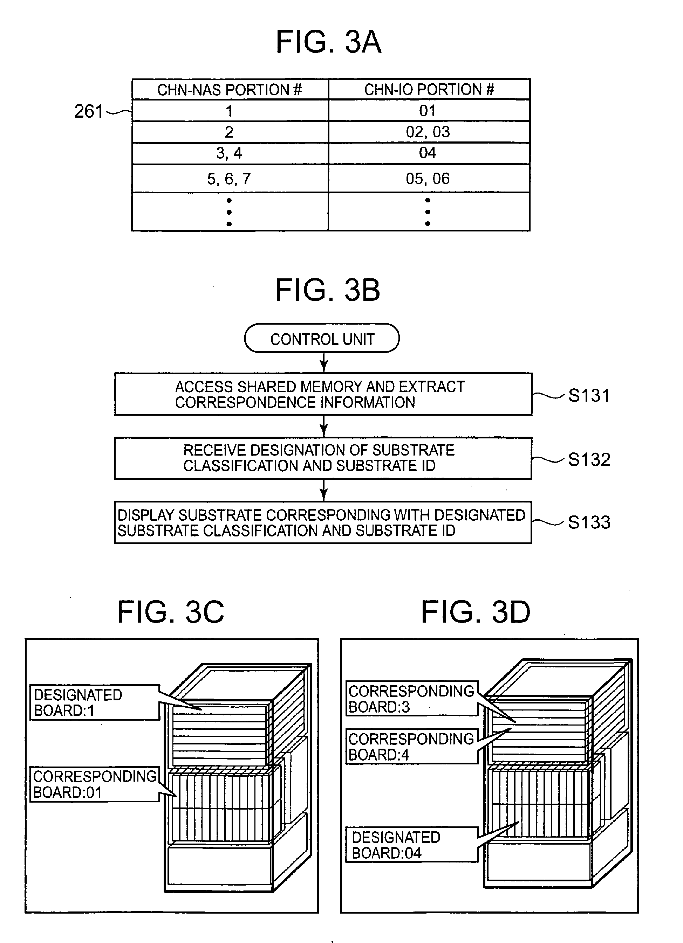

Fig. 3A shows an example of the constitution of correspondence information.

The correspondence information 261 associates the ID of the CHN-NAS portion 3 (number indicating the mount position, for example) and the ID of the CHN-IO portion 5 (number indicating the mount position, for example). The correspondence is actually performed in accordance with which CHN-IO portion 5 is communicably connected with which CHN-NAS portion 3. In the illustrated example, the fact that the CHN-NAS portion 3 of ID '1' and CHN-IO portion 5 of ID '1' are communicably connected is shown.

Further, the CHN-NAS portion 3 and CHN-IO portion 5 may not necessarily be connected in a pair. For example, the CHN-NAS portion 3 and CHN-IO portion 5 are each provided with a plurality of connection ports 79 and 81. Alternatively, the CHN-NAS portion 3 and CHN-IO portion 5 may be connected as shown in a pair plurality, a plurality of pairs, or a plurality of pair pluralities by means of a method of inserting a switch between the CHN-NAS portion 3 and CHN-IO portion 5.

The control unit 31 is able to show on a display apparatus which CHN-IO portion 5 is communicably connected to which CHN-NAS portion 3 on the basis of the correspondence information 261.

Fig. 3B shows an example of the flow of correspondence display processing that is performed by the control unit 31.

The control unit 31 accesses the shared memory 39 and extracts the correspondence information 261 from the shared memory 39 (step S131). The control unit 31 receives a designation regarding the substrate type and substrate ID from the operator (system administrator, for example) (S132). The control unit 31 specifies the substrate that corresponds with the designated substrate type and substrate ID from the extracted correspondence information 261 and displays the specified substrate.

In the process flow, as illustrated in Fig. 3C, for example, the control unit 31 is able to display a GUI (graphical interface) that displays a schematic diagram of the storage control system 1 and, when a substrate of the substrate type 'NAS portion' and with the substrate ID '1' is designated on the GUI, is able to specify the corresponding substrate type and substrate ID from the correspondence information 261 and display the substrate with the specified substrate type and substrate ID (more specifically, the substrate with the substrate ID '01' and substrate type 'IO portion') as shown in Fig. 3C. Likewise, for example, when the substrate of the substrate type 'IO portion' and with the substrate ID '04' is designated on the above GUI, for example, the control unit 31 is able to specify the corresponding substrate type and substrate ID from the correspondence information 261 and display the substrate with the specified substrate type and substrate ID (more specifically, two substrates of the substrate type 'NAS portion' and with the substrate IDs '3' and '4') as shown in Fig. 3D.

As a result of the above processing, specification of which CHN-IO portion 5 is communicably connected with which CHN-NAS portion 3 is straightforward for the operator of the control unit 31.

The setting of the constitution table 89 is performed after (or before) correspondence between the CHN-NAS portion 3 and CHN-IO portion 5 has been registered as detailed above. The constitution table 89 is written from the control unit 31 to the IO memory 87 of each of the CHN-IO portions 5 via the connection portion 33, for example.

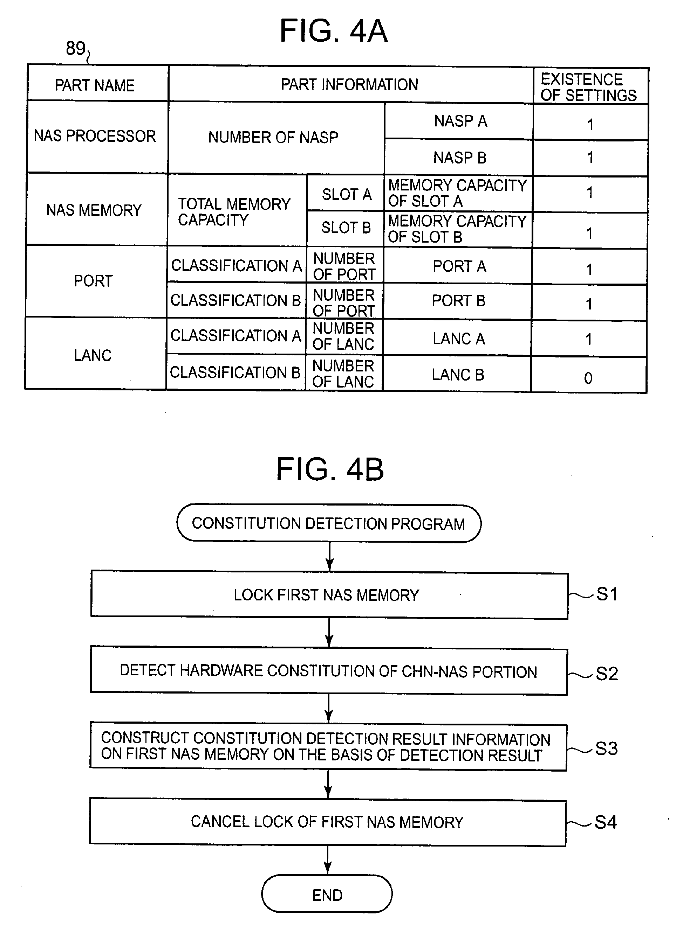

Fig. 4A shows an example of the constitution of the constitution table 89.

The constitution (what kind of circuit parts there are, for example) of the hardware that is installed in the CHN-NAS portion (hereinafter called 'corresponding NAS portion') 3 that is capable of communicating with a certain CHN-IO portion 5 is registered in the constitution table 89 that is written to the IO memory 87 of the CHN-IO portion 5. More specifically, for example, part names, part information and the existence of settings are registered for each detachable circuit part in the corresponding NAS portion 3 in the constitution table 89. Part information elements that are contained in the part information on each of the circuit parts include, for example, the number of parts mounted, the location, the part type (a metal cable or optical cable, for example, if the part is a port, for example) and support part data. Support part data corresponds to 'NASPA', 'Slot A', 'Port A' , 'LANC A' and so forth, for example, in Fig. 4A. Support part data is data relating to supported parts, for example, and, more specifically, can be data containing at least one of the name of the vendor of the part, manufacturer's name, model number, and hardware ID. As for the existence of settings, '1' is registered to reflect the existence of settings when settings have been made and '0' is registered to reflect the absence of settings when no settings have been made, for example.

An example of the constitution of the constitution table 89 was described hereinabove. Further, when the CHN-NAS portion 3 and CHN-IO portion 5 are connected in a plurality of pairs or a plurality of pair pluralities, the constitution table 89 may be prepared separately from the corresponding NAS portion 3.

After correspondence between the CHN-NAS portion 3 and CHN-IO portion 5 and the setting of the constitution table 89 have been performed, power is supplied to the CHN-NAS portion 3 and CHN-IO portion 5 at the same time or with different timing by turning on the power supply of the storage control system 1, for example. The CHN-NAS portion 3 and CHN-IO portion 5 can each start up when their own power supplies are turned on. When the CHN-NAS portion 3 and CHN-IO portion 5 start up, for example, the NAS processor 77A (and/or 77B) of the CHN-NAS portion 3 is able to read the constitution detection program 71 from the first NAS memory 69A (or second NAS memory 69B) and execute the constitution detection program 71.

Fig. 4B shows an example of the flow of processing that is performed as a result of the NAS processor 77A reading and executing a constitution detection program 71 during startup.

The NAS processor 77A locks, for the purpose of exclusive control, the first NAS memory 69A where the constitution detection result information 75 is stored (a region where at least the constitution detection result information 75 is stored, for example) (S1).

Thereafter, the NAS processor 77A detects the hardware constitution of the CHN-NAS portion 3 where the NAS processor 77A itself is mounted (S2). More specifically, for example, the NAS processor 77A is able to acquire predetermined part information elements relating to circuit parts from the circuit parts that can be present in the predetermined positions by sequentially accessing each of a plurality of predetermined positions on the CHN-NAS portion 3. The NAS processor 77A is able to acquire predetermined part information elements (at least support part data) from circuit parts in the position of the access destination if the correct circuit parts are mounted in the predetermined position of the access destination. However, if failed circuit parts are mounted in the predetermined position or circuit parts have not been mounted in the predetermined position, the NAS processor 77A is unable to acquire part information elements from the access destination.

The NAS processor 77A completes the constitution detection result information 75 in the first NAS memory 69A on the basis of the detection results of S1 (S3).

Following completion of the constitution result information 75, the NAS processor 77A releases the lock of the first NAS memory 69A (S4).

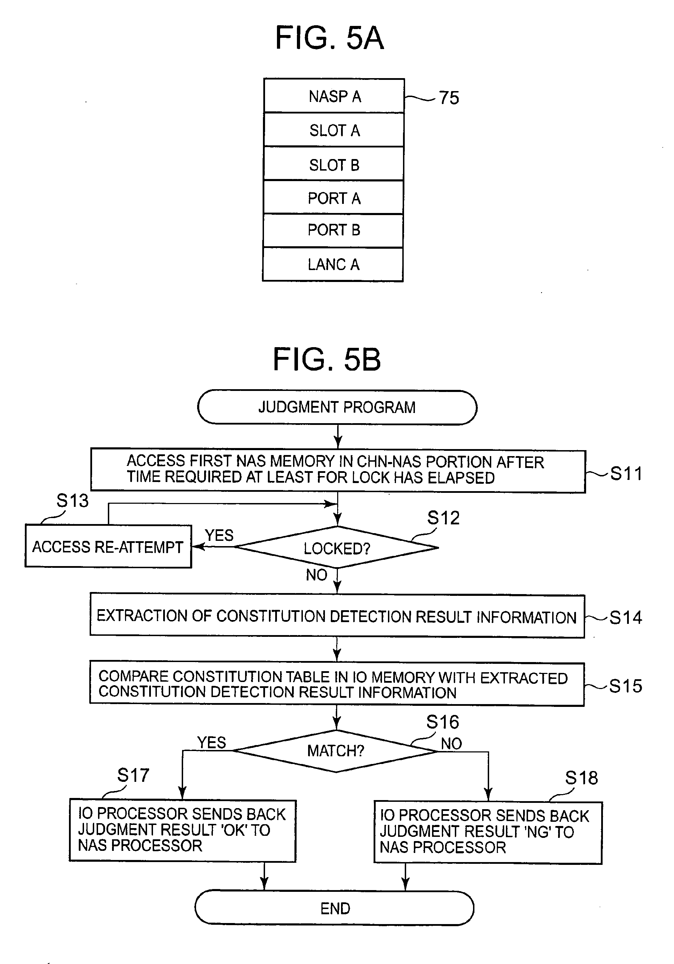

Fig. 5A shows an example of the constitution of the constitution detection result information 75.

The constitution detection result information 75 is constituted by a collection of one or more part information elements that are acquired by the NAS processor 77A, for example. The constitution detection result information 75 shown in Fig. 5A does not contain part information elements of the second NAS processor 77B and second LANC 63B. This is because the NAS processor 77A is able to acquire part information elements (support part data, for example) from points other than the two positions
in which the second NAS processor 77B and second LANC 63B are mounted but is unable to acquire part information elements from the two positions (in other words, because only the second NAS processor 77B and second LANC 63B cannot be detected).

An example of the constitution of the constitution detection result information 75 was described above.

Further, the CHN-IO portion 5 can start up when its own power supply is turned on, similarly to the CHN-NAS portion 3. When the CHN-IO portion 5 starts up, for example, the IO processor 85 of the CHN-IO portion 5 is able to read the judgment program 91 from the IO memory 87 and execute the judgment program 91.

Fig. 5B shows an example of the flow of the processing that is performed as a result of the IO processor 85 reading and executing the judgment program 91 during startup.

The IO processor 85 accesses the first NAS memory 69A in the corresponding NAS portion 3 after a predetermined time required for at least the lock has elapsed since startup began (S11). As a result, if the first NAS memory 69A is locked (YES in S12), the IO processor 85 re-attempts access (S13) and repeats the access attempt until the lock is cancelled.

When, as a result of S11 or S13, the lock is cancelled (NO in S12), the IO processor 85 extracts constitution detection result information 75 from the first NAS memory 69A (S14) and compares the constitution table 89 in the IO memory 87 and the extracted constitution detection result information 75 (S15). In S15, for example, the IO processor 85 compares the respective part information elements and the existence of settings of the constitution table 89 with the respective part information elements of the constitution detection result information 75.

When, as a result of S15, the part information elements corresponding with each of the part information elements that have been set in the constitution table 89 exist in the constitution detection result information 75, part information elements corresponding with each of the part information elements that have not been set in the constitution table 89 none in the constitution detection result information 75, and all of the respective part information elements that have been set in the constitution table 89 match the respective part information elements in the constitution detection result information 75 (YES in S16), the IO processor 85 sends back 'OK' as the judgment result to the first NAS processor 77A (and/or the second NAS processor 77B) (S17).

On the other hand, when, as a result of S15, the part information elements corresponding with the part information elements that have been set in the constitution table 89 none in the constitution detection result information 75, the part information elements corresponding with the part information elements that have not been set in the constitution table 89 exist in the constitution detection result information 75, or the set part information elements and the part information elements in the constitution detection result information 75 corresponding with the set part information elements do not match, the IO processor 85 sends back 'NG' as the judgment result to the first NAS processor 77A (and/or the second NAS processor 77B) (S18).

When the judgment result is received from the IO processor 85, the NAS processor 77A is able to perform the following processing by executing the post-processing program 73 that is read beforehand, for example.

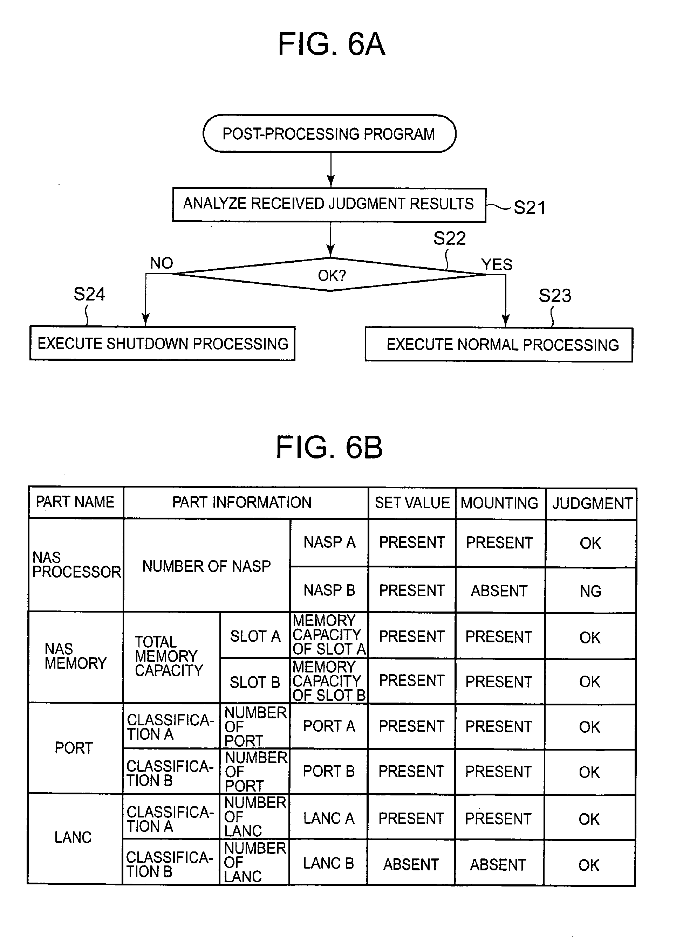

Fig. 6A shows an example of the flow of processing that is performed as a result of the NAS processor 77A executing an post-processing program 73.

The NAS processor 77A analyzes the received judgment result (S21) and, if the judgment result is 'OK' (YES in S22), executes normal processing (S23). 'Normal processing' as it is meant here is, for example, processing in which the NAS processor 77A reports the fact that startup of the CHN-NAS portion 3 is complete to a predetermined apparatus (host apparatus 11, for example).

On the other hand, when, as a result of S21, the judgment result is 'NG' , the NAS processor 77A executes shutdown processing to close the CHN-NAS portion 3 in which the NAS processor 77A is mounted (S24).

An example of the flow of processing that is performed at startup of the CHN-NAS portion 3 and CHN-IO portion 5 was provided above.

Further, in the above flow of processing, after a comparison between the constitution table 89 and constitution detection result information 75 has been performed, the IO processor 85 or control unit 31 is able to display the details of the judgment result on the display screen of the control unit 31.

Fig. 6B shows an example of the display of the judgment result details. Fig. 6B is an example of a display when a comparison between the constitution table 89 shown in Fig. 4A and the constitution detection result information 75 shown in Fig. 5A is made.

According to this example, the part name, part information, the existence of settings, the existence of mounting, and subjudgment results are displayed for each circuit part registered in the constitution table 89 as the judgment result details.

The part names, part information and existence of settings here can be information that is registered in the constitution table 89.

The 'existence of mounting' denotes whether the NAS processor 77A has been able to detect a circuit part, in other words, whether the part information elements of the circuit parts are contained in the constitution detection result information 75. When it has been possible to detect a circuit part, the existence of mounting is 'present' and, when detection has not been possible, existence of mounting is 'absent'.

A subjudgment result is a judgment result for each circuit part. The subjudgment result is determined as OK or NG on the basis of the part information elements and existence of settings in the constitution table 89 and on the basis of the constitution detection result information 75. For example, when the existence of settings is 'present' , part information elements are contained in the constitution detection result information 75 and when the part information elements match, the IO processor 85 or control unit 31 determines an OK subjudgment result but, when there is no match between the part information elements or part information elements are not contained in the constitution detection result information 75, an NG subjudgment result is yielded. Further, for example, if the part information elements are not contained in the constitution detection result information 75 when the existence of settings is 'absent', the IO processor 85 or control unit 31 produces an OK subjudgment result. However, even when the existence of settings is 'absent', if the corresponding part information elements are contained in the constitution detection result information 75, the IO processor 85 or control unit 31 produces an NG subjudgment result. In the first embodiment example, the IO processor 85 sends back the judgment result 'NG' to the NAS processor 77A as the overall judgment result when even one NG subjudgment result is obtained.

Further, in the first embodiment, the constitution detection result information 75 is updated during operation of the CHN 8 (that is, during operation of the CHN-NAS portion 3 and CHN-IO portion 5), following startup.

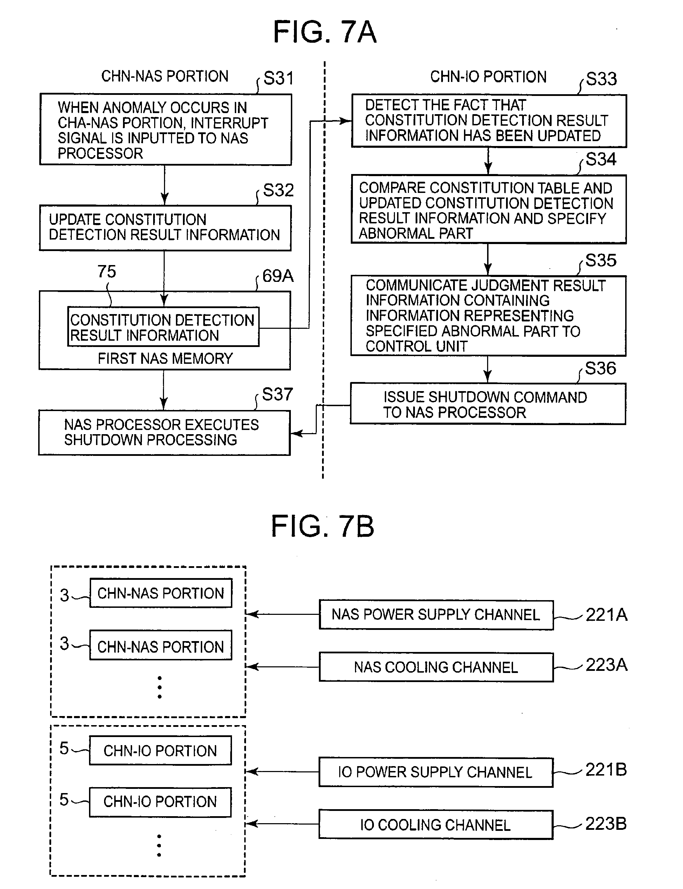

Fig. 7A shows an example of the process flow when the constitution detection result information 75 is updated during operation of the CHN8 and an example of the process flow that is performed after the update has been performed.

For example, when an anomaly occurs with a certain circuit part in the CHN-NAS portion 3, an interrupt signal is inputted to the first NAS processor 77A (and/or second NAS processor 77B) . The first NAS processor 77A updates the constitution detection result information 75 of the first NAS memory 69A in response to the input of the interrupt signal (S32). More specifically, for example, the first NAS processor 77A deletes part information elements of the circuit part that is the source of the input of the interrupt signal from the constitution detection result information 75. The processing of S32 may be performed by executing the constitution detection program 71, for example.

The IO processor 85 detects the fact that the constitution detection result information 75 has been updated (S33). More specifically, for example, the IO processor 85 is able to detect the fact that the constitution detection result information 75 has been updated by referencing the constitution detection result information 75 at regular intervals or receiving an update notice from the NAS processor 77A that updated the constitution detection result information 75.

The IO processor 85 specifies the circuit part in which the anomaly occurred ('abnormal part' hereinafter) by comparing the constitution table 89 and the updated constitution detection result information 75 (S34). Here, it is possible to specify a circuit part without part information elements in the constitution detection result information 75 as an abnormal part even when the existence of settings is 'present', for example.

The IO processor 85 reports judgment result information containing information indicating the specified abnormal part (support part data of the abnormal part, for example) to the control unit 31 (S35). The control unit 31 is able to receive the judgment result information and display the received judgment result information. As a result, the operator of the control unit 31 is able to know in which circuit part of the CHN-NAS portion 3 the anomaly has occurred.

Furthermore, the IO processor 85 may issue a shutdown command to the first NAS processor 77A (and/or second NAS processor 77B) as shown (S36). In this case, the first NAS processor 77A may issue shutdown processing to close the CHN-NAS portion 3 in which the first NAS processor 77A is installed in response to the shutdown command (S37).

Processing such as that illustrated in Fig. 7A is sometimes performed during operation of the CHN8. Further, the processing of S33 to S35 may be performed by the judgment program 91, for example.

According to the first embodiment, the CHN8 is divided into the CHN-NAS portion 3 and CHN-IO portion 5. As a result, as shown in Fig. 7B, the power supply channels can be divided into a NAS power supply channel 221A for one or more CHN-NAS portions 3 and an IO power supply channel 221B for one or more CHN-IO portions 5. Further, the CHN-IO portion 5 consumes less power than the CHN-NAS portion 3. Based on these facts, the power supply capacity of the IO power supply channel 221B can be made smaller than the power supply capacity of the NAS power supply channel 221A and, consequently, performance wastage can be suppressed.

Further, according to the first embodiment, the CHN-NAS portion 3 and CHN-IO portion 5 are installed in different ports 2 and 4 that are physically separate. Thus, as shown in Fig. 7B, the cooling channels can be divided into a NAS cooling channel 223A for one or more CHN-NAS portions 3 and an IO cooling channel 223B for one or more CHN-IO portions 5. Further, the CHN-IO portion 5 has a lower heat emission temperature than the CHN-NAS portion 3. Based on these facts, the cooling performance of the IO cooling channel 223B (fan installation number or fan rotation speed, for example) can be made smaller than the cooling performance of the NAS cooling channel 223A and, consequently, performance wastage can be suppressed.

Further, according to the first embodiment, the CHN-NAS portion 3 has at least one circuit part detachably installed. Hence, circuit parts that are not necessary for the performance required for the CHN-NAS portion 3 need not be installed, whereby costs can be suppressed.

Further, according to the first embodiment, the constitution table 89 that represents the hardware constitution that is to be constructed for the CHN-NAS portion 3 is pre-registered, detection of the hardware constitution of the CHN-NAS portion 3 is performed, and it is judged whether the hardware constitution of the CHN-NAS portion 3 is right or wrong by means of a comparison between the constitution detection result information 75 representing the detection results and the constitution table 89. As a result, a drop in the reliability of the hardware constitution of the CHN-NAS portion 3 can be suppressed.

A check of the hardware constitution may be performed by an operator by displaying the result of detecting the hardware constitution on the display screen of the control unit 31, for example. However, in the detection of the hardware constitution, not only in cases where circuit parts are not installed but also in cases where a circuit part is installed but the circuit part is subject to an anomaly, there is the possibility that detection will indicate that the circuit part does not exist. In preventing such erroneous detection, it is effective to judge whether the hardware constitution of the CHN-NAS portion 3 is right or wrong by means of a method such as that of the first embodiment.

Further, according to the first embodiment above, when judging whether the hardware constitution is right or wrong, support part data are compared and, if there is a mismatch, the judgment result is NG and the CHN-NAS portion 3 can be closed. As a result, operation of the CHN-NAS portion 3 in a state where unsupported circuit parts are installed can be prevented beforehand.

The first embodiment was described hereinabove.

Further, as a general rule in the above description, the detection of the hardware constitution was performed by the undetachable first NAS processor 77A and the storage of the constitution detection result information 75 was performed by the undetachable first NAS memory 69A but the processes are not limited to such an arrangement. That is, for example, when the power supply of the CHN-NAS portion 3 is turned on and the CHN-NAS portion 3 starts up, the second NAS processor 77B may access the first NAS processor 77A and, when no response is obtained, detection of the hardware constitution may be performed.

Further, for example, instead of or in addition to the IO processor 85, the NAS processors 77A and/or 77B may judge whether the hardware constitution of the CHN-NAS portion 3 is right or wrong by means of a comparison between the constitution detection result information 75 and constitution table 89.

### Second Embodiment

The second embodiment of the present invention will be described next. At such time, the differences from the first embodiment will mainly be described and a description of points that are also common to the first embodiment will be omitted or simplified in order to avoid repetitive description.

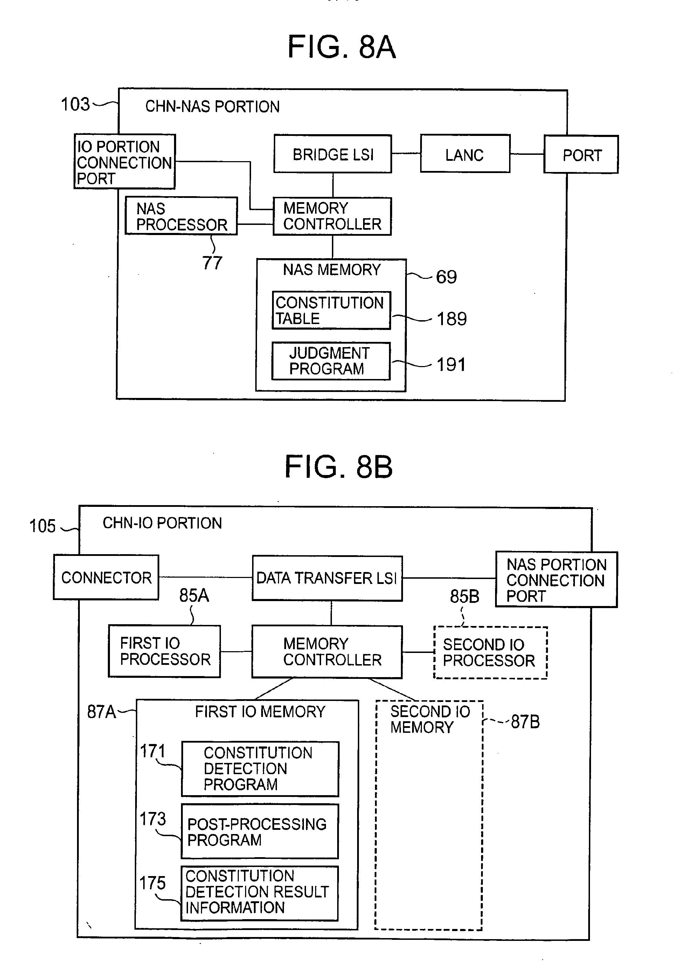

Fig. 8A shows an example of the constitution of the CHN-NAS portion of the second embodiment of the present invention. Fig. 8B shows an example of the constitution of the CHN-IO portion of the second embodiment of the present invention.

In the second embodiment, circuit parts are not detachably installed in the CHN-NAS portion 3 but circuit parts are detachably installed in the CHN-IO portion 5. Detachable circuit parts include, for example, a second IO processor 85B, and a second IO memory 87B, whereas the first IO processor 85A and first IO memory 87A are undetachably installed.

Further, a constitution detection program 171, post-processing program 173, and constitution detection result information 175 stored in the first NAS memory 69A of the first embodiment are stored in the first IO memory 87A in the second embodiment. Instead, the constitution table 189 and judgment program 191 stored in the IO memory 87 of the first embodiment are stored in the NAS memory 69. Therefore, in the second embodiment, detection of the hardware constitution and so forth (Fig. 4B) and processing that corresponds with the judgment result (Fig. 6A) are performed by the first IO processor 85A (and/or second IO processor 85B) and, conversely, the judgment of whether the hardware constitution is right or wrong (Fig. 5B) is performed by the NAS processors 77.

Further, circuit parts may be installed detachably on both the CHN-NAS portion and the CHN-IO portion respectively.

### Third Embodiment

The third embodiment of the present invention will be described hereinbelow.

In the third embodiment, even when, as a result of the judgment of whether the hardware constitution is right or wrong, it is judged that the hardware constitution is not correct, shutdown is not necessarily performed depending on the content of the detected hardware constitution and the required reliability level.

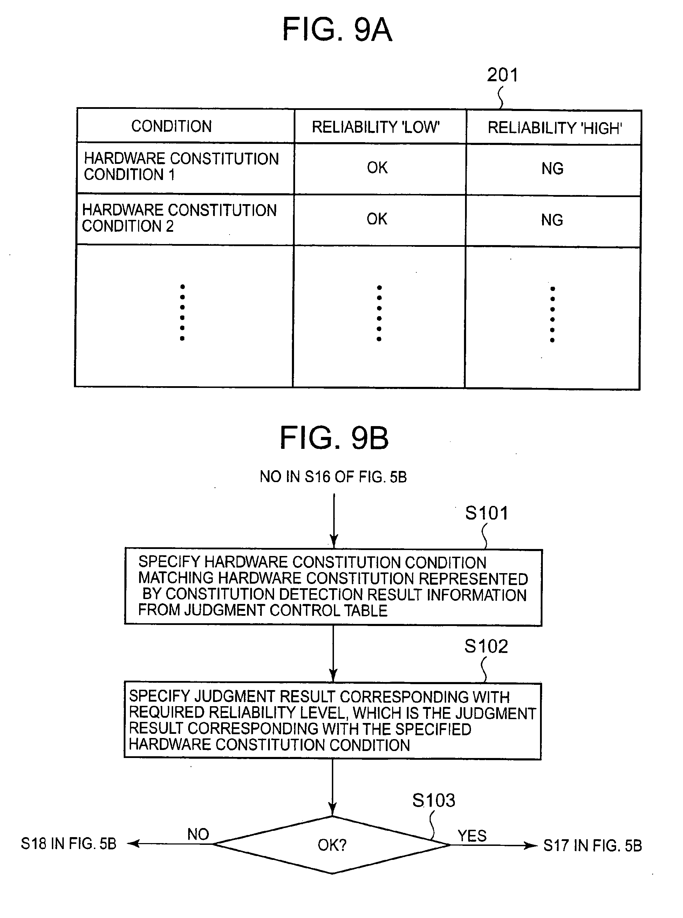

Fig. 9A shows an example of the constitution of the judgment control table of the third embodiment of the present invention.

A judgment control table 201 is able to allow storage in a storage area in the storage control system 1 such as the IO memory 87, for example. The judgment control table 201 is a table that serves to match hardware constitution conditions such as those of the detected hardware constitution and, when the required reliability level is a certain level, control what kind of judgment result is outputted. As a hardware constitution condition, for example, 'at least one NAS processor and at least one NAS memory' or similar is possible, for example. Further, the 'required reliability level' may be determined beforehand for each host apparatus 11, or may be automatically judged in accordance with the type of the host apparatus 11 constituting the communication partner of the CHN-NAS portion 3, for example.

The IO processor 85 can control the judgment result that is communicated to the NAS processor 77A on the basis of the judgment control table 201.

Fig. 9B shows an example of the flow of the judgment control processing that is performed in the third embodiment of the present invention.

When NO is yielded in S16 of Fig. 5, for example, theIOprocessor 85 specifies a hard constitution condition that matches the hardware constitution represented by the constitution detection result information 75 from the judgment control table 201 (S101). Further, the IO processor 85 specifies the judgment result corresponding with the required reliability level, which is the judgment result corresponding with the specified hardware constitution condition, from the judgment control table 201 (S102). If, as a result of S102, the judgment result is 'OK' (YES in S103), the processing of S17 in Fig. 5B is performed and, if the judgment result is 'NG' (NO in S103), the processing of S18 in Fig. 5B is executed.

According to the third embodiment, even when the detected hardware constitution is judged to be incorrect in the judgment of whether the hardware constitution is right or wrong, the CHN-NAS portion 3 can be made to operate instead of being shut down depending on the content of the detected hardware constitution and the required reliability level.

### Fourth Embodiment

The fourth embodiment of the present invention will be described hereinbelow.

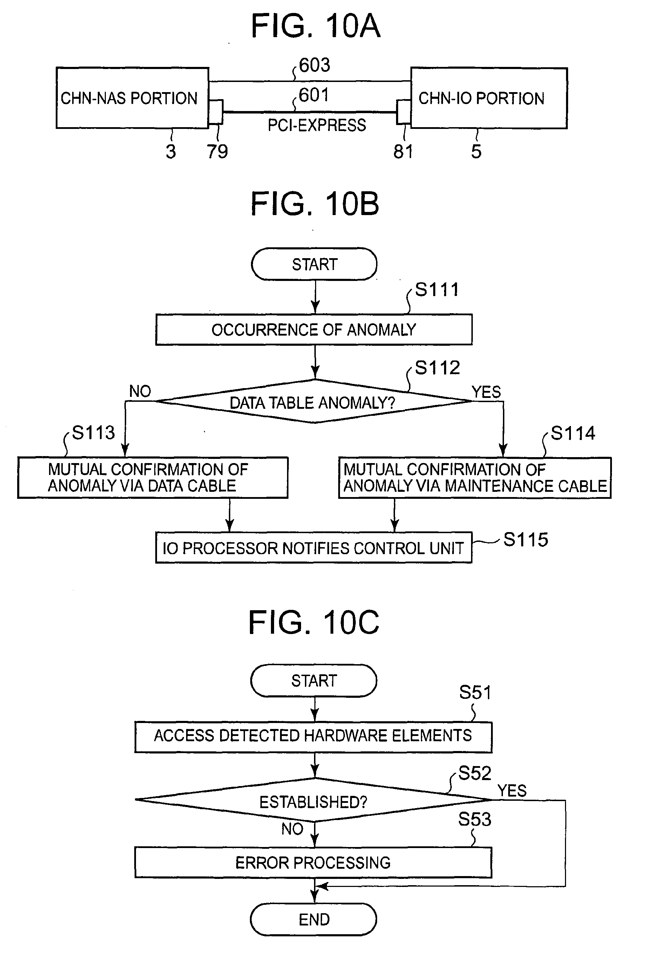

Fig. 10A shows an example of the constitution of the connection between the CHN-NAS portion 3 and CHN-IO portion 5 of the fourth embodiment of the present invention.

The IO portion connection port 79 of the CHN-NAS portion 3 and the NAS portion connection port 81 of the CHN-IO portion 5 are connected via a cable (data cable, for example) 601 for transferring data. The transfer performed via the data cable 601 is a serial transfer, for example, and, more specifically, is a transfer that follows the PCI-Express (Peripheral Component Interconnect Express) standard, for example.

Further, the CHN-NAS portion 3 and CHN-IO portion 5 are connected via a maintenance cable 603. Communications via the maintenance cable 603 are performed when an anomaly with the data cable 601 is detected, for example.

Fig. 10B shows an example of the flow of processing that is performed by the NAS processor 77A and IO processor 85 of the fourth embodiment of the present invention.

When the occurrence of an anomaly is detected by the NAS processor 77A or IO processor 85 (S111), mutual communication with the processor of the partner is attempted via the data cable 601 (S112).

If, as a result of S112, there is no anomaly in the data cable 601 (NO in S112), the NAS processor 77A and IO processor 85 are able to mutually confirm anomalies via the data cable 601 (S113) and, if there is an anomaly in the data cable 601 (YES in S112), mutual confirmation of an anomaly cannot be performed via the data cable 601. Therefore, mutual confirmation of an anomaly is performed via the maintenance cable 603 (S114).

After S113 or S114, the IO processor 85 is able to notify the control unit 31 of the occurrence of an anomaly (S115).

According to the fourth embodiment, the mutual confirmation of an anomaly can be performed via the maintenance cable 603 even when there is an anomaly in the data cable 601 by connecting the CHN-NAS portion 3 and CHN-IO portion 5 by means of the data cable 601 and maintenance cable 603.

### Fifth Embodiment

The fifth embodiment of the present invention will be described hereinbelow.

In the fifth embodiment, in a predetermined processing stage, at the time the detected hardware constitution is judged to be right or wrong, for example, processing to doubly confirm whether the detection is correct (detection part confirmation processing hereinafter) is performed.

Fig. 10C shows an example of the flow of the detection part confirmation processing that is performed in the fifth embodiment of the present invention.

For example, the processor that executes the judgment program (the IO processor 85, for example) accesses the detected circuit part (that is, a circuit part corresponding with the part information elements contained in the constitution detection result information 75) (S51). As a result, if it is judged that access has failed as a result of a response not being received and so forth (NO in S52), the processor is able to execute predetermined error processing (output of judgment result 'NG', for example) (S53).

Although several embodiments of the present invention were described hereinabove, these embodiments serve to illustrate the present invention and there is no intention to limit the scope of the present invention to such embodiments. The present invention can be implemented in a variety of other forms. For example, in the first embodiment, the NAS processor 77A or 77B may not only perform circuit part detection and post-processing, and so forth, but may also perform a comparison of the constitution table 89 and constitution detection result information 75.

## Claims

1. A storage control system, comprising:
a first interface control circuit substrate that constitutes an interface with a host apparatus and that receives a file access request from the host apparatus, converts the received file access request to a block access request, and outputs the converted block access request; and
a second interface control circuit substrate that constitutes an interface with a storage apparatus and that receives the block access request outputted by the first interface control substrate and accesses the storage apparatus in accordance with the received block access request,
wherein the first interface control circuit substrate is constituted by communicably connecting a first subcircuit substrate that converts the file access request from the host apparatus to a block access request and outputs the block access request, and a second subcircuit substrate that receives and outputs the block access request outputted by the first subcircuit substrate.

2. The storage control system according to claim 1, wherein the storage control system comprises a storage area that is capable of storing electronic information;
each of the first subcircuit substrate and second subcircuit substrate can comprise a plurality of circuit parts;
at least one circuit part of the plurality of circuit parts is detachably installed in at least one of the first subcircuit substrate and second subcircuit substrate;
the storage area stores constitution information representing two or more circuit parts that are to be installed on the subcircuit substrate that allows circuit parts to be detachably installed among the first subcircuit substrate and second subcircuit substrate;
during startup, at least one of the first subcircuit substrate and second subcircuit substrate:
executes detection processing to detect a circuit part that is installed on a subcircuit substrate that allows circuit parts to be detachably installed,
executes comparison processing to compare the constitution information stored in the storage area with detection results, and
determines whether to permit operation of the first interface control circuit substrate that is constituted by the first subcircuit substrate and second subcircuit substrate on the basis of the comparison results.

3. The storage control system according to claim 2, wherein, of the first subcircuit substrate and second subcircuit substrate, at least the first subcircuit substrate detachably comprises at least one circuit part.

4. The storage control system according to claim 3, wherein the second subcircuit substrate undetachably comprises all the circuit parts;
the first subcircuit substrate executes the detection processing; and
the second subcircuit substrate executes the comparison processing.

5. The storage control system according to any one of claims 2 to 4, wherein a display apparatus that allows information to be displayed is communicably connected to the storage control system;
at least one of the first subcircuit substrate and second subcircuit substrate judges whether a conforming information element is contained in the constitution information for each of the detected circuit parts in the comparison processing and displays the judgment result for each circuit part on the display apparatus.

6. The storage control system according to any one of claims 2 to 5, wherein at least one of the first subcircuit substrate and second subcircuit substrate does not permit operation of the first interface control circuit substrate that is constituted by the first subcircuit substrate and second subcircuit substrate when it is recognized, as a result of the comparison, that a circuit part not conforming with the circuit part represented by the constitution information is installed.

7. The storage control system according to claim 6, wherein information on supported circuit parts, which is the type of the circuit part to be installed, is contained in the constitution information.

8. The storage control system according to any one of claims 2 to 5, wherein at least one of the first subcircuit substrate and second subcircuit substrate permits operation of the first interface control circuit substrate that is constituted by the first subcircuit substrate and second subcircuit substrate in cases where, even when it is recognized, as a result of the comparison, that a circuit part that does not conform with the circuit part represented by the constitution information is installed, the result of the recognition does not match a predetermined condition.

9. The storage control system according to any one of claims 2 to 8, wherein a display apparatus that is capable of displaying information is communicably connected to the storage control system;
the storage control system comprises a detection result storage area that is capable of storing the detection results during startup; and,
during operation of the first interface control circuit substrate, a subcircuit substrate that allows circuit parts to be detachably mounted updates the detection results during startup when the occurrence of a fault in a certain circuit part that is installed in the subcircuit substrate is detected; and
at least one of the first subcircuit substrate and second subcircuit substrate compares the updated detection result with the constitution information, specifies the circuit part in which the fault has occurred, and displays information representing the specified circuit part.

10. The storage control system according to any one of claims 2 to 9, wherein at least one of the first subcircuit substrate and second subcircuit substrate accesses the detected circuit part and executes predetermined error processing when access fails.

11. The storage control system according to any one of claims 1 to 10, wherein a display apparatus that allows information to be displayed is communicably connected to the storage control system;
the storage control system further comprises:
a correspondence information storage area that is capable of storing substrate correspondence information indicating correspondence between a first substrate ID corresponding with the first subcircuit substrate and a second substrate ID corresponding with the second subcircuit substrate,
wherein the storage control system receives a designation of a substrate ID and a substrate classification as either the first subcircuit substrate or the second subcircuit substrate, specifies the substrate classification and substrate ID corresponding with the designated substrate classification and substrate ID from the substrate correspondence information stored in the correspondence information storage area, and displays the specified substrate classification and substrate ID on the display apparatus.

12. The storage control system according to any one of claims 1 to 11, wherein the first subcircuit substrate and second subcircuit substrate are communicably connected by means of a data line and maintenance line; and
at least one of the first subcircuit substrate and second subcircuit substrate notifies the partner subcircuit substrate of an anomaly via the maintenance line when a fault has occurred in the data line.

13. The storage control system according to any one of claims 1 to 12, wherein the storage control system comprises:
a first substrate installation part where the first subcircuit substrate is installed; and
a second substrate installation part where the second subcircuit substrate is installed,
wherein the first substrate installation part and the second substrate installation part exist in separate locations.

14. An information processing apparatus, comprising:
a first subcircuit substrate;
a second subcircuit substrate constituting a circuit substrate that is physically separate from the first subcircuit substrate; and
a storage area capable of storing electronic information,
wherein a circuit substrate for executing predetermined information processing is constituted by communicably connecting the first subcircuit substrate and second subcircuit substrate;
each of the first subcircuit substrate and second subcircuit substrate can comprise a plurality of circuit parts;
at least one circuit part of the plurality of circuit parts is detachably installed in at least one of the first subcircuit substrate and second subcircuit substrate;
the storage area stores constitution information representing two or more circuit parts that are to be installed on a subcircuit substrate that allows circuit parts to be detachably installed from among the first subcircuit substrate and second subcircuit substrate; and,
at startup, at least one of the first subcircuit substrate and second subcircuit substrate executes detection processing to detect circuit parts installed on a subcircuit substrate that allows circuit parts to be detachably installed,
executes comparison processing that compares the constitution information stored in the storage area with the detection results, and
determines whether to permit operation of the circuit substrate that is constituted by the first subcircuit substrate and second subcircuit substrate on the basis of the comparison results.

15. An information processing method, wherein, at startup, at least one of a first subcircuit substrate and a second subcircuit substrate that is physically separate from the first subcircuit substrate but communicably connected thereto:
detects circuit parts installed on a subcircuit substrate that allows circuit parts to be detachably installed;
compares the constitution information stored in a predetermined storage area, which is constitution information representing two or more circuit parts that are to be installed on a subcircuit substrate that allows circuit parts to be detachably installed with the detection results; and
determines whether to permit operation of the circuit substrate that is constituted by the first subcircuit substrate and second subcircuit substrate, on the basis of the comparison results.
